# NEUE EUROPÄISCHE PATENTSCHRIFT

(11) **EP 1 188 314 B2**
(45) Veröffentlichungstag und Bekanntmachung des Hinweises auf die Entscheidung über den Einspruch: **24.03.2010**
(45) Hinweis auf die Patenterteilung: 27.11.2002
(21) Anmeldenummer: 00938482.7
(22) Anmeldetag: 11.04.2000
(51) Int. Cl.: H04N 7/088, H04W 92/04, H04H 20/38

(54) **KOMMUNIKATIONSVERFAHREN UND KOMMUNIKATIONSYSTEM ZUR DARSTELLUNG VON KURZNACHRICHTEN AN TV-GERÄTEN**
COMMUNICATION METHOD AND SYSTEM FOR SHOWING SHORT MESSAGES ON TV SETS
PROCEDE ET SYSTEME DE COMMUNICATION POUR AFFICHER DES MESSAGES COURTS SUR DES TELEVISEURS

(30) Priorität: 24.06.1999 DE 19929001
(43) Veröffentlichungstag der Anmeldung: 20.03.2002
(73) Patentinhaber: SIEMENS AKTIENGESELLSCHAFT, 80333 München (DE)
(72) Erfinder: ZECHLIN, Oliver, D-81677 München (DE)
(86) Internationale Anmeldenummer: PCT/DE2000/001111
(87) Internationale Veröffentlichungsnummer: WO 2001/001684

(56) Entgegenhaltungen:
- EP-A- 0 880 293
- EP-A1- 0 723 369
- EP-B1- 0 914 741
- WO-A-00/27115
- WO-A-99/63729
- WO-A1-94/ 13101
- WO-A2-98/ 28920
- JP-A- 11 027 643
- US-A- 5 818 935

## Beschreibung

Die vorliegende Erfindung betrifft ein Kommunikationsverfahren nach dem Oberbegriff des Anspruches 1 bzw. ein Kommunikationssystem nach dem Oberbegriff des Anspruches 11.

In herkömmlichen Mobilfunksystemen werden Kommunikationsinformationen, insbesondere Sprachinformationen, zwischen mobilen Endgeräten oder Mobiltelefonen übertragen, wobei zur Übertragung der Informationen Basisstationen vorgesehen sind, welche die von einem Mobiltelefon kommenden Informationen an das gewünschte Ziel-Endgerät weiterleiten. Die Basisstationen dienen auch als Schnittstelle zum Telefon-Festnetz, an welches verdrahtete Teilnehmer-Endgeräte angeschlossen sind, mit denen ebenfalls eine Kommunikation mit den Mobiltelefonen möglich ist.

In modernen Mobilfunksystemen, wie z.B. GSM-Mobilfunksystemen (Global System For Mobile Communications), werden darüber hinaus sogenannte Teleservices angeboten. Ein derartiger Teleservice ist in GSM-Mobilfunksystemen beispielsweise der sogenannte Kurznachrichtendienst (SMS, Short Message Services), der die Übertragung von Kurznachrichten, bestehend aus bis zu 160 (7-Bit ASCII) alphanumerischen Zeichen, zwischen den Mobiltelefonen des Mobilfunksystems unterstützt. Jede Kurznachricht wird dabei in Form eines Datenpakets übertragen. Eine derartige Kurznachricht wird über die Tastatur des einen Mobiltelefons eingegeben und auf dem Display oder der Anzeige des von dem sendenden Mobilfunkteilnehmer angewählten Mobiltelefons dargestellt.

Bei diesen bekannten Kruznachrichtendiensten, welche in herkömmlichen Mobilfunksystemen angeboten werden, kann jedoch eine Kurznachricht in der Regel lediglich an einen Ziel-Teilnehmer gesendet werden. Sollen mehrere Ziel-Teilnehmer angesprochen werden, muß die Übertragung der Kurznachricht mehrmals mit unterschiedlichen Rufnummern wiederholt werden, welche den einzelnen gewünschten Ziel-Teilnehmern zugeordnet sind. Darüber hinaus ist die Übertragung von Kurznachrichten nur zwischen Personen möglich, die ein Mobiltelefon oder ein anderes zum Empfang von derartigen Kurzinformationen fähiges mobiles Endgerät besitzen. Aus der EP-A-0 880 293 ist ein system bekannt, in dem kurzinformationen über einen TV-kanal übertragen werden.

Der vorliegenden Erfindung liegt daher die Aufgabe zugrunde, ein Kommunikationsverfahren und ein entsprechendes Kommunikationssystem vorzuschlagen, welches mit einfachen Mitteln die Übertragung von Kürznachrichten an einen nahezu unbegrenzten Personenkreis ermöglicht.

Diese Aufgabe wird gemäß der vorliegenden Erfindung durch ein Kommunikationsverfahren mit den Merkmalen des Anspruches 1 bzw. ein Kommunikationssystem mit den Merkmalen des Anspruches 11 gelöst. Die Unteransprüche definieren jeweils bevorzugte und vorteilhafte Ausführungsformen der vorliegenden Erfindung.

Erfindungsgemäß wird vorgeschlagen, von mobilen Endgeräten, z.B. Mobiltelefonen, eines Mobilfunksystems aus paketorientierte Nachrichten, wie z.B. SMS-Kurznachrichten oder mittels GPRS (GSM General Packet Radio Services) übertragene Daten, an eine TV-Sendeeinheit zu senden, welche diese Nachrichten in TV-Sendesignale umwandelt und in das TV-Netz einspeist, so daß die Nachrichten auf den Bildschirmen aller an das TV-Netz angeschlossenen TV-Geräte sichtbar gemacht und dargestellt werden können.

Die Darstellung dieser Kurznachrichten kann beispielsweise fortlaufend auf einem freien Kanalplatz oder auch in den Videotext eines entsprechende TV-Programms eingebunden erfolgen.

Auf diese Weise können die Teilnehmer spontan und interaktiv an Fernsehproduktionen oder Fernsehsendungen teilnehmen. Bisher war diesbezüglich lediglich bekannt, sich an der jeweiligen Fernsehesendung über eine Telefon-Sprachverbindung, über MFV-fähige Telefone (Mehrfrequenz-Wahlverfahren) oder auch über eine kabelgebundene Datenübertragung (insbesondere über das Internet), die entsprechende Hardware voraussetzt und demzufolge kostenaufwendig ist, zu beteiligen.

Des weiteren besteht aufgrund der vorliegenden Erfindung auch die Möglichkeit, virtuelle TV-Chatplätze zum Chatten zwischen einer Vielzahl von Teilnehmern oder TV-Marktplätze zum Aufgeben von Verkaufs-/Kaufsanzeigen etc. zu schaffen.

Mit Hilfe der vorliegenden Erfindung kann jeder Mobilfunkteilnehmer einen nahezu unbegrenzten Personenkreis ansprechen, da die von ihm angewählte TV-Sendeeinheit die jeweiligen Kurznachrichten an sämtliche an das Fernsehnetz angeschlossenen TV-Geräte weiterleitet. Insbesondere können auch Teilnehmer angesprochen werden, die kein mobiles Endgerät besitzen. Zur aktiven Teilnahme an der Kommunikation muß der entsprechende Teilnehmer lediglich ein TV-Gerät und ein Mobiltelefon besitzen.

Die Erfindung wird nachfolgend näher anhand der beigefügten Zeichnung erläutert.

Fig. 1 zeigt den vereinfachten Aufbau eines Kommunikationssystems gemäß einem Ausführungsbeispiel der vorliegenden Erfindung.

Fig. 2A und 2B zeigen Darstellungen zur Erläuterung der Eingabe und Übertragung von Kurznachrichten in dem in Fig. 1 gezeigten Kommunikationssystem.

Fig. 3 zeigt eine Darstellung zur Erläuterung der Visualisierung von über das in Fig. 1 gezeigte Kommunikationssystem übertragenen Kurznachrichten auf dem Bildschirm eines TV-Geräts.

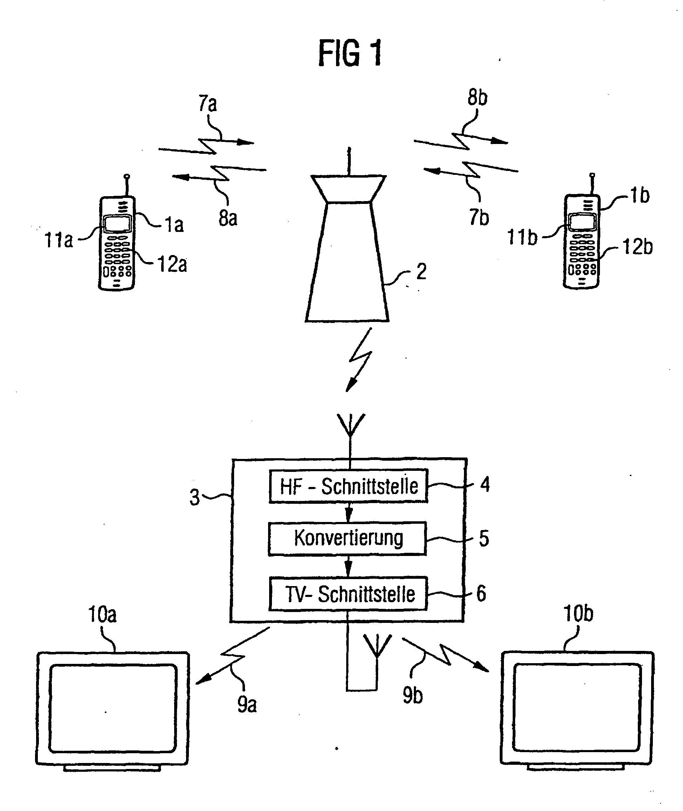

Das in Fig. 1 gezeigte Kommunikationssystem umfaßt ein Mobilfunksystem, beispielsweise ein Mobilfunksystem gemäß dem GSM-Standard, welches durch zwei Mobiltelefone 1a, 1b und eine Basisstation 2 repräsentiert ist. Die Mobiltelefone 1a, 1b senden über einen sogenannten Uplink 7a, 7b Kommunikationsinformationen an die Basisstation 2, welche wiederum Kommunikationsinformationen über einen Downlink 8a, 8b an die Mobiltelefone 1a, 1b überträgt. Die Basisstation 2 dient als Schnittstelle einerseits zwischen allen Mobiltelefonen des entsprechenden Mobilfunksystems und andererseits zwischen dem Mobilfunksystem und einem nicht gezeigten Telefon-Festnetz, so daß über die Mobiltelefone 1a, 1b auch mit Festnetz-Teilnehmern telefoniert oder kommuniziert werden kann. Das Mobilfunknetz ist in der Regel zellular aufgebaut, wobei jeder Funkzelle eine Basisstätion 2 zugeordnet ist, welche für die in der entsprechenden Funkzelle befindlichen Mobiltelefone 1a, 1b zuständig ist.

Von den Mobiltelefonen 1a, 1b können paketorientierte Nachrichten, d.h. in Form von Datenpaketen übertragene Informationen, gesendet werden. Bei diesen paketorientierten Nachrichten kann es sich beispielsweise um SMS-Kurznachrichten (Short Message Services) oder um mittels GPRS (GSM General Packet Radio Services) übertragene Daten handeln. Diese Kurznachrichten werden über die Tastatur 12a, 12b des Mobiltelefons oder mittels Spracheingabe (durch Spracherkennung am Mobiltelefon selbst oder über einen Sprach-Server des Mobilfunknetzes) eingegeben und über einen Mobilfunkkanal an den gewünschten und über eine entsprechende Rufnummer identifizierten Mobilfunkteilnehmer übertragen, um dann dort auf dem Display oder der Anzeige 11a, 11b dargestellt zu werden.

Darüber hinaus ist ein Fernseh- oder TV-System vorgesehen, welches eine TV-Sendeeinheit 3 mit einem daran angeschlossenen terrestrischen oder kabelgebundenen Fernsehnetz umfaßt. Durch die Wahl einer Telefonnummer, welche einer bestimmten Fernsehsendung bzw. der entsprechenden TV-Sendeeinheit 3 zugeordnet ist, kann jeder Mobilfunkteilnehmer Kurznachrichten nicht nur an einen anderen Mobilfunkteilnehmer übertragen, sondern auch an sämtliche an das Fernsehnetz der angewählten TV-Sendeeinheit 3 angeschlossenen TV-Geräte 10a, 10b.

Die TV-Sendeeinheit 3 weist eine Hochfrequenz-Schnittstelle 4 auf, über die Kurzinformationen von einem Mobilfunkteilnehmer 1a, 1b empfangen, demoduliert und decodiert werden können. Mit der Hochfrequenz-Schnittstelle 4 ist eine Einheit 5 zum Aufbereiten der empfangenen Kurznachrichten und zum Konvertieren der Kurznachrichten in ein fernsehkompatibles Format gekoppelt. Die somit verarbeiteten Informationen werden anschließend über eine TV-Schnittstelle 6 in das Fernsehnetz eingespeist und in Form von TV-Signalen über TV-Signalpfade 9a, 9b kabellos oder kabelgebunden an die an das Fernsehnetz angeschlossenen TV-Geräte 10a, 10b übertragen.

Bei der TV-Sendeeinheit 3 muß es sich nicht um eine komplette TV-Sendeanstalt handeln, sondern die Funktion der TV-Sendeeinheit 3 kann auch lediglich durch einen entsprechend ausgestalteten Server realisiert sein, der über eine entsprechende Telefonnummer von jedem Mobiltelefon 1a, 1b angewählt werden kann und die konvertierten empfangenen Kurznachrichten in das Fernsehnetz einspeisen kann.

Die an die TV-Geräte 10a, 10b übertragenen Kurznachrichten können auf unterschiedliche Art und Weise auf den entsprechenden Bildschirmen visualisiert werden. So ist beispielsweise denkbar, die Kurzinformationen von der TV-Sendeeinheit 2 stets über einen eigens hierfür reservierten TV-Sendekanal an die TV-Geräte 10a, 10b zu übertragen, wobei dort für die Anzeige der augenblicklich vorliegenden Kurzinformationen ein eigener Kanalplatz vorgesehen ist. Die Kurzinformationen können in den TV-Geräten 10a, 10b auch in den von verschiedenen TV-Programmen oder TV-Sendern angebotenen Videotext-Dienst eingebunden werden. Ebenso ist möglich, die Kurzinformationen an die TV-Geräte 10a, 10b zusammen mit den einem bestimmten TV-Programm oder TV-Sender zugeordneten TV-Sendesignalen zu übertragen und die Kurznformationen dann in das normalen TV-Programm einzublenden. Die Darstellung der Kurznachrichten auf den Bildschirmen der an das Fernsehnetz angeschlossenen TV-Geräte 10a, 10b kann fortlaufend oder aber auch in Form einer örtlich auf dem entsprechenden Bildschirm feststehenden Anzeige erfolgen.

Den Kurznachrichten können auch von der TV-Sendestation 2 zusätzliche Informationen hinzugefügt werden, wie z.B. der Name und/oder die Telefonnummer des die Kurznachrichten sendenden Mobilfunk-Teilnehmers.

Mit Hilfe des in Fig. 1 gezeigten erfindungsgemäßen Kommunikationssystems ist es beispielsweise für jeden Mobilfunk-Teilnehmer möglich, interaktiv und spontan in eine laufende Fernsehsendung einzugreifen und Mitteilungen an das Fernsehpublikum zu senden.

Ebenso ist es somit möglich, virtuelle TV-Marktplätze zu schaffen, wo Mobilfunkteilnehmer Verkaufs- oder Kaufsanzeigen aufgeben können.

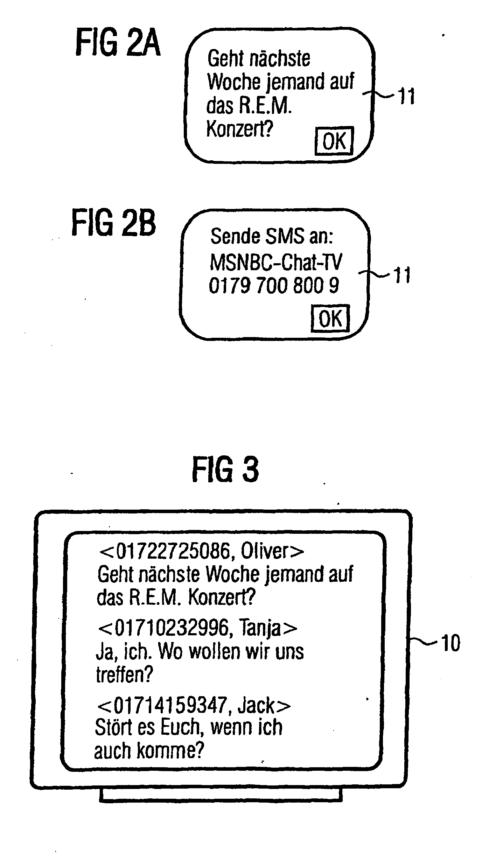

Darüber hinaus kann beispielsweise auch ein virtueller TV-Chatraum geschaffen werden, was nachfolgend näher anhand der Darstellungen von Fig. 2A, 2B und 3 erläutert werden soll.

Wie in Fig. 2A anhand des Inhalts des Displays 11 eines Mobiltelefons gezeigt ist, gibt ein Mobilfunkteilnehmer über die Tastatur seines Mobiltelefons zunächst die Kurznachricht "Anyone going to the R.E.M. concert next week?" ein und sendet diese durch Eingabe der Telefonnummer "0179 700 800 9", welche der Anwendung "MSNBC-Chat TV" zugewiesen ist, über das Mobilfunknetz an eine Basisstation 2 (vgl. die Darstellung von Fig. 2B). Die Basisstation 2 leitet die Kurznachricht daraufhin an eine der angewählten Anwendung entsprechende TV-Sendeeinheit 3 weiter.

In der TV-Sendeeinheit 3 wird diese Kurznachricht in ein TV-Sendesignal konvertiert, in das entsprechende Fernsehnetz eingespeist und an die daran angeschlossenen TV-Geräte übertragen. Wie in Fig. 3 anhand des Bildschirminhalts eines entsprechenden TV-Geräts 10 gezeigt ist, werden beispielsweise unter einem freien Kanalplatz alle an das TV-Gerät 10 übertragenen Kurznachrichten sämtlicher Mobilfunkteilnehmer in Form einer von unten nach oben durchlaufenden Anzeige dargestellt, so daß sich eine zu einem Internet-Chat ähnliche Darstellung der Nachrichten ergibt. Bei dem in Fig 3 gezeigten Beispiel werden neben den eigentlichen Kurznachrichten auch der Name und die Telefonnummer des die Kurznachricht jeweils sendenden Mobilfunkteilnehmers dargestellt.

## Patentansprüche

1. Kommunikationsverfahren, umfassend die Schritte
a) Eingeben von Kurznachrichteninformationen an einem mobilen Endgerät (1a), und
b) Senden der Kurznachrichteninformationen von dem mobilen Endgerät (1a) über einen Mobilfunkkanal (7) an eine entsprechende Basisstation (2),
**dadurch gekennzeichnet**
**dass** das Verfahren ermöglicht, ausgehend von der Basisstation (2) die Kurznachrichteninformationen sowohl wahlweise
durch die Schritte
c) Übertragen der Kurznachrichteninformationen von der Basisstation (2) an eine TV-Sendeeinheit (3),
d) Umwandeln der Kurznachrichteninformationen in entsprechende TV-Sendesignale,
e) Übertragen der den Kurznachrichteninformationen entsprechenden TV-Sendesignale an ein TV-Gerät (10), und
f) Visualisieren der TV-Sendesignale zur Darstellung der Kurznachrichteninformationen auf dem TV-Gerät (10), wobei auf dem TV-Gerät Kurznachrichteninformationen verschiedener mobiler Endgeräte (1a,b) gleichzeitig dargestellt werden, weiterzuverarbeiten,
als auch direkt an ein weiteres mobiles Endgerät (1b) zur Ausgabe zu übertragen.

2. Kommunikationsverfahren nach Anspruch 1,
**dadurch gekennzeichnet,**
**dass** im Schritt a) zusammen mit den Kurznachrichteninformationen eine Telefonnummer eingegeben wird, und
**dass** im Schritt c) die Kurznachrichteninformationen an eine der Telefonnummer entsprechende TV-Sendeeinheit (3) übertragen werden.

3. Kommunikationsverfahren nach Anspruch 1 oder 2,
**dadurch gekennzeichnet,**
**dass** im Schritt e) die den Kurznachrichteninformationen entsprechenden TV-Sendesignale über einen für die Übertragung von Kurznachrichteninformationen reservierten Sendekanal an das TV-Gerät (10) übertragen werden.

4. Kömmunikationsverfahren nach Anspruch 1 oder 2,
**dadurch gekennzeichnet,**
**dass** im Schritt e) die den Kurznachrichteninformationen entsprechenden TV-Sendesignale über einen für ein TV-Programm reservierten Sendekanal an das TV-Gerät übertragen werden.

5. Kommunikationsverfahren nach Anspruch 4,
**dadurch gekennzeichnet,**
**dass** im Schritt f) die Kurznachrichteninformationen im Videotext des entsprechenden TV-Programms dargestellt werden.

6. Kommunikationsverfahren nach Anspruch 4,
**dadurch gekennzeichnet,**
**dass** im Schritt f) die Kurznachrichteninformationen in das TV-Programm eingeblendet werden.

7. Kommunikationsverfahren nach einem der vorhergehenden Ansprüche,
**dadurch gekennzeichnet,**
**dass** im Schritt f) die Kurznachrichteninformationen auf dem TV-Gerät (10) in Form einer örtlich feststehenden Anzeige dargestellt werden.

8. Kommunikationsverfahren nach einem der Ansprüche 1-6,
**dadurch gekennzeichnet,**
**dass** im Schritt f) die Kurznachrichteninformationen auf dem TV-Gerät (10) in Form einer durchlaufenden Anzeige dargestellt werden.

9. Kommunikationsverfahren nach einem der vorhergehenden Ansprüche,
**dadurch gekennzeichnet,**
**dass** die Kurznachrichteninformationen im Schritt f) auf dem TV-Gerät (10) zusammen mit einer Telefonnummer dargestellt werden, welche dem in den Schritten a) und b) zum Eingeben und Senden der Kurznachrichteninformationen verwendeten mobilen Endgerät (1a) zugeordnet ist.

10. Kommunikationsverfahren nach einem der vorhergehenden Ansprüche,
**dadurch gekennzeichnet,**
**dass** die Kurznachrichteninformationen im Schritt a) über eine Tastatur (12) des mobilen Endgeräts (1a) eingegeben werden.

11. Kommunikationssystem,
mit mehreren mobilen Endgeräten (1a, b), welche über einen Mobilfunkkanal (7, 8) miteinander kommunizieren,
wobei die mobilen Endgeräte (1a, b) zur übertragen von Kurznachrichteninformationen ausgelegt sind, wobei weiter das Kommunikationssystem mindestens eine TV-Sendeeinheit (3) umfaßt, welche Empfangsmittel (4) zum Empfangen der Kurznachrichteninformationen, die von einem der mobilen Endgeräte (1a) übermittelt worden sind, Umwandlungsmittel (5) zum Umwandeln der empfangenen Kurznachrichteninformationen in TV-Sendesignale und Sendemittel (6) zum Senden der den empfangenen Kurznachrichteninformationen entsprechenden TV-Sendesignale über einen TV-Sendekanal (9) aufweist, und
wobei
die mobilen Endgeräte (1a, b) über mindestens eine Basisstation (2) miteinander kommunizieren,
**dadurch gekennzeichnet,**
**dass** die Basisstation (2) derart ausgestaltet ist, daß sie von einem der mobilen Endgeräte (1a) empfangene Kurznachrichteninformationen wahlweise
entweder an die durch einen entsprechende Telefonnummer identifizierte TV-Sendeeinheit (3) weiterleitet
oder direkt an ein weiteres mobiles Endgerät (1b) zur Ausgabe überträgt,
wobei Mittel zum Visualisieren der TV-Sendesignale zur Darstellung der Kurznachrichteinformationen auf einen TV-Gerät vorgesehen sind und die es ermöglichen Kurznachrichteinformationen verschiedener mobiler Endgeräte (1a,b) gleichzeitig darzustellen.

12. Kommunikationssystem nach Anspruch 11,
**dadurch gekennzeichnet,**
**dass** die Sendemittel (6) der TV-Sendeeinheit (3) derart ausgestaltet sind, daß sie die den Kurznachrichteninformationen entsprechenden TV-Sendesignale über einen für die Übertragung von Kurznachrichteninformationen reservierten TV-Sendekanal (9) senden.

13. Kommunikationssystem nach Anspruch 12,
**dadurch gekennzeichnet,**
**dass** die Sendemittel (6) der TV-Sendeeinheit (3) derart ausgestaltet sind, daß sie die den Kurznachrichteninformationen entsprechenden TV-Sendesignale über einen für ein TV-Programm reservierten TV-Sendekanal (9) senden.

14. Kommunikationssystem nach Anspruch 13,
**dadurch gekennzeichnet,**
**dass** die Sendemittel (6) der TV-Sendeeinheit (3) derart ausgestaltet sind, daß sie die Kurznachrichteninformationen in die Videotextinformationen des entsprechenden TV-Programms eingebettet über den TV-Sendekanal (9) senden.

15. Kommunikationssystem nach einem der Ansprüche 11-14,
**dadurch gekennzeichnet,**
**dass** die Kurznachrichteninformationen über den TV-Sendekanal an mehrere TV-Geräte (10) übertragen werden,
wobei die TV-Geräte (10) die Kurznachrichteninformationen in Form einer örtlich feststehenden Anzeige darstellen.

16. Kommunikationssystem nach einem der Ansprüche 11-14
**dadurch gekennzeichnet,**
**dass** die Kurznachrichteninformationen über den TV-Sendekanal an mehrere TV-Geräte (10) übertragen werden,
wobei die TV-Geräte (10) die Kurznachrichteninformationen in Form einer durchlaufenden Anzeige darstellen.

## Claims

1. Communications method,
comprising the following steps:
a) Input of short message information on a mobile terminal (1a), and
b) Transmission of the short message information from the mobile terminal (1a) via a mobile radiotelephone channel (7) to a corresponding base station (2),
**characterized in that,**
from the base station (2), the short message information is optionally either further processed by the following steps:
c) Transmission of the short message information from the base station (2) to a TV transmitter unit (3),
d) Conversion of the short message information into corresponding TV transmission signals,
e) Transmission of the TV transmission signals corresponding to the short message information to a TV set (10), and
f) Visualization of the TV transmission signals to present the short message information on the TV set (10), with short message information from different mobile terminals (1a, b) being presented simultaneously on the TV set,
or is transmitted directly to a further mobile terminal (1b) for output.

2. Communications method according to Claim 1,
**characterized in that,**
in step a), a telephone number is entered together with the short message information, and
in step c), the short message information is transmitted to a TV transmitter unit (3) corresponding to the telephone number.

3. Communications method according to Claim 1 or 2,
**characterized in that,**
in step e), the TV transmission signals corresponding to the short message information are transmitted via a transmission channel reserved for the transmission of short message information to the TV sets (10).

4. Communications method according to Claim 1 or 2,
**characterized in that,**
in step e), the TV transmission signals corresponding to the short message information are transmitted via a transmission channel reserved for a TV programme to the TV set.

5. Communications method according to Claim 4,
**characterized in that,**
in step f), the short message information is presented in the videotext of the corresponding TV programme.

6. Communications method according to Claim 4,
**characterized in that,**
in step f), the short message information is inserted into the TV programme.

7. Communications method according to one of the preceding claims,
**characterized in that,**
in step f), the short message information is presented on the TV set (10) in the form of a permanent local display.

8. Communications method according to one of Claims 1-6,
**characterized in that,**
in step f), the short message information is presented on the TV set (10) in the form of a scrolling display.

9. Communications method according to one of the preceding claims,
**characterized in that**
the short message information in step f) is presented on the TV set (10) together with a telephone number which is allocated to the mobile terminal (1a) which is used in steps a) and b) to enter and send the short message information.

10. Communications method according to one of the preceding claims,
**characterized in that**
the short message information in step a) is entered via a keypad (12) of the mobile terminal (1a).

11. Communications system,
with a plurality of mobile terminals (1a, b) which communicate with one another via a mobile radiotelephone channel (7, 8), whereby the mobile terminals (1a, b) are designed to transmit short message information, whereby furthermore the communications system comprises at least one TV transmitter unit (3) which has reception means (4) to receive the short message information which has been transferred by one of the mobile terminals (1a), conversion means (5) to convert the received short message information into TV transmission signals, and transmission means (6) to transmit the TV transmission signals corresponding to the received short message information via a TV transmission channel (9), and whereby the mobile terminals (1a, b) communicate with one another via at least one base station (2),
**characterized in that**
the base station (2) is designed in such a way that it optionally either forwards short message information received from one of the mobile terminals (1a) to the TV transmitter unit (3) identified by a corresponding telephone number, or transmits it directly to a further mobile terminal (1b) for output, means being provided for visualization of the TV transmission signals to present the short message information at a TV set which allow short message information from different mobile terminals (1a, b) to be presented simultaneously.

12. Communications system according to Claim 11,
**characterized in that**
the transmission means (6) of the TV transmitter unit (3) are designed in such a way that they transmit the TV transmission signals corresponding to the short message information via a TV transmission channel (9) reserved for the transmission of short message information.

13. Communications system according to Claim 12,
**characterized in that**
the transmission means (6) of the TV transmitter unit (3) are designed in such a way that they transmit the TV transmission signals corresponding to the short message information via a TV transmission channel (9) reserved for a TV programme.

14. Communications system according to Claim 13,
**characterized in that**
the transmission means (6) of the TV transmitter unit (3) are designed in such a way that they transmit the short message information via the TV transmission channel (9), embedded in the videotext information of the corresponding TV programme.

15. Communications system according to one of Claims 11-14,
**characterized in that**
the short message information is transmitted via the TV transmission channel to a plurality of TV sets (10), whereby the TV sets (10) present the short message information in the form of a permanent local display.

16. Communications system according to one of Claims 11-14,
**characterized in that**
the short message information is transmitted via the TV transmission channel to a plurality of TV sets (10),
whereby the TV sets (10) present the short message information in the form of a scrolling display.

## Revendications

1. Procédé de communication, comprenant les étapes
a) entrée d'informations de messages courts à un terminal mobile (1a), et
b) envoi des informations de messages courts du terminal mobile (1a) via un canal de téléphonie mobile (7) à une station de base (2) correspondante,
**caractérisé en ce que**
le procédé permet, à partir de la station de base (2), aussi bien au choix de retraiter les informations de messages courts par les étapes
c) transmission des informations de messages courts de la station de base (2) à une unité d'émission de télévision (3),
d) conversion des informations de messages courts en signaux d'émission de télévision correspondants,
e) transmission des signaux d'émission de télévision correspondant aux informations de messages courts à un téléviseur (10) et
f) visualisation des signaux d'émission de télévision pour la représentation des informations de messages courts sur le téléviseur (10), des informations de messages courts de différents terminaux mobiles (1a, b) étant présentées simultanément au téléviseur
ou de les transmettre également directement à un autre terminal mobile (1b) pour la sortie.

2. Procédé de communication selon la revendication 1,
**caractérisé en ce que,**
à l'étape a), un numéro de téléphone est entré en même temps que les informations de messages courts, et **en ce que**,
à l'étape c), les informations de messages courts sont transmises à une unité d'émission de télévision (3) correspondant au numéro de téléphone.

3. Procédé de communication selon la revendication 1 ou 2,
**caractérisé en ce que,**
à l'étape e), les signaux d'émission de télévision correspondant aux informations de messages courts sont transmis par un canal d'émission réservé à la transmission des informations de messages courts au téléviseur (10).

4. Procédé de communication selon la revendication 1 ou 2,
**caractérisé en ce que,**
à l'étape e), les signaux d'émission de télévision correspondant aux informations de messages courts sont transmis par un canal d'émission réservé à un programme de télévision au téléviseur.

5. Procédé de communication selon la revendication 4,
**caractérisé en ce que,**
à l'étape f), les informations de messages courts sont présentées dans le vidéotexte du programme de télévision correspondant.

6. Procédé de communication selon la revendication 4,
**caractérisé en ce que,**
à l'étape f) les informations de messages courts sont intégrées dans le programme de télévision.

7. Procédé de communication selon l'une quelconque des revendications précédentes,
**caractérisé en ce que,**
à l'étape f), les informations de messages courts sont présentées sur le téléviseur (10) sous la forme d'un affichage localement fixe.

8. Procédé de communication selon l'une quelconque des revendications 1-6,
**caractérisé en ce que,**
à l'étape f), les informations de messages courts sont présentées sur le téléviseur (10) sous la forme d'un affichage défilant.

9. Procédé de communication selon l'une quelconque des revendications précédentes,
**caractérisé en ce que,**
à l'étape f), les informations de messages courts sont présentées sur le téléviseur (10) ensemble avec un numéro de téléphone qui est attribué au terminal mobile (1a) utilisé aux étapes a) et b) pour l'entrée et l'envoi des informations de messages courts.

10. Procédé de communication selon l'une quelconque des revendications précédentes,
**caractérisé en ce que,**
à l'étape a), les informations de messages courts sont entrées au moyen d'un clavier (12) du terminal mobile (1a).

11. Système de communication,
comprenant plusieurs terminaux mobiles (1a, b), qui communiquent les uns avec les autres au moyen d'un canal de téléphonie mobile (7, 8),
les terminaux mobiles (1a, b) étant conçus pour la transmission d'informations de messages courts, le système de communication comprenant également au moins une unité d'émission de télévision (3), qui comprend des moyens de réception (4) pour la réception des informations de messages courts qui ont été transmises par l'un des terminaux mobiles (1a), des moyens de conversion (5) pour la conversion des informations de messages courts reçues en signaux d'émission de télévision et des moyens d'émission (6) pour l'envoi des signaux d'émission de télévision correspondant aux informations de messages courts reçues au moyen d'un canal d'émission de télévision (9),
les terminaux mobiles (1a, b) communiquant les uns avec les autres au moyen d'au moins une station de base (2),
**caractérisé en ce que,**
la station de base (2) est conçue de telle sorte qu'elle achemine des informations de messages courts reçues de l'un des terminaux mobiles (1a) au choix à l'unité d'émission de télévision (3) identifiée par un numéro de téléphone correspondant ou les transmet directement à un autre terminal mobile (1b) pour la sortie, des moyens pour la visualisation des signaux d'émission de télévision étant prévus sur un téléviseur pour la représentation des informations de messages courts et qui permettent de présenter en même temps des informations de messages courts de divers terminaux (1a, b) mobiles.

12. Système de communication selon la revendication 11,
**caractérisé en ce que,**
les moyens d'émission (6) de l'unité d'émission de télévision (3) sont conçus de telle sorte qu'ils envoient les signaux d'émission de télévision correspondant aux informations de messages courts au moyen d'un canal d'émission de télévision (9) réservé à la transmission des informations de messages courts.

13. Système de communication selon la revendication 12,
**caractérisé en ce que**
les moyens d'émission (6) de l'unité d'émission de télévision (3) sont conçus de telle sorte qu'ils envoient les signaux d'émission de télévision correspondant aux informations de messages courts par l'intermédiaire d'un canal d'émission de télévision (9) réservé à un programme de télévision.

14. Système de communication selon la revendication 13,
**caractérisé en ce que**
les moyens d'émission (6) de l'unité d'émission de télévision (3) sont conçus de telle sorte qu'ils envoient les informations de messages courts par l'intermédiaire du canal d'émission de télévision (9) de façon intégré dans les informations de vidéotexte du programme de télévision correspondant.

15. Système de communication selon l'une quelconque des revendications 11-14,
**caractérisé en ce que**
les informations de messages courts sont transmises via le canal d'émission de télévision à plusieurs téléviseurs (10), les téléviseurs (10) présentant les informations de messages courts sous forme d'un affichage localement fixe.

16. Système de communication selon l'une quelconque des revendications 11 à 14,
**caractérisé en ce que**
les informations de messages courts sont transmises via le canal d'émission de télévision à plusieurs téléviseurs (10), les téléviseurs (10) présentant les informations de messages courts sous forme d'un affichage défilant.
